# EUROPEAN PATENT SPECIFICATION

(11) **EP 2 715 389 B1**
(45) Date of publication and mention of the grant of the patent: **12.07.2017**
(21) Application number: 12789158.8
(22) Date of filing: 23.05.2012
(51) Int. Cl.: G01S 5/02, G01S 5/14

(54) **POSITIONING SYSTEMS AND METHODS AND LOCATION BASED MODIFICATION OF COMPUTING DEVICE APPLICATIONS**
POSITIONIERUNGSSYSTEME UND -VERFAHREN SOWIE STANDORTBASIERTE MODIFIZIERUNG VON BERECHNUNGSVORRICHTUNGSANWENDUNGEN
SYSTÈMES ET PROCÉDÉS DE POSITIONNEMENT ET MODIFICATION BASÉE SUR L'EMPLACEMENT D'APPLICATIONS DE DISPOSITIF DE CALCUL

(30) Priority: 23.05.2011 US 201161489118 P
(43) Date of publication of application: 09.04.2014
(73) Proprietor: Wise-sec Ltd., 23049 Migdal HaEmek (IL)
(72) Inventor: MAOR, Vadim, 23049 Migdal HaEmek (IL)
(74) Representative: V.O.
(86) International application number: PCT/IL2012/050182
(87) International publication number: WO 2012/160560

(56) References cited:
- US-A- 5 732 354
- US-A- 6 055 434
- US-A1- 2005 221 841
- US-A1- 2006 262 014
- US-A1- 2008 045 172
- US-A1- 2008 309 557
- US-A1- 2009 143 080
- US-A1- 2009 322 890
- US-A1- 2009 322 890
- US-A1- 2010 109 864
- US-B1- 6 839 560
- US-B2- 7 263 368

## Description

### FIELD AND BACKGROUND OF THE INVENTION

The present invention, in some embodiments thereof, relates to computing device applications and, more particularly, but not exclusively, to positioning system and methods and to location-based functionality modification of computing device applications at runtime.

Since the accession of the global positioning system (GPS) for popular position-locating purposes, various positioning technologies have prospered in the consumer market. The positioning technology has rapidly developed and is widely used and applied to a variety of fields besides the primary military applications. For example, in the ground transport such as the railway transportation, the positioning technology is adapted for positioning and controlling operations of trains to prevent trains from colliding with each other and further increase the system transportation capacity and efficiency. In the automobile navigation, positioning technologies are used to provide vehicle drivers with an automatic navigation function for locating the shortest route to a destination. In air transport, the positioning and navigation functions of the GPS technology are used to assist and facilitate the automatic navigation system of the airplanes during landing and flying.

During the last years, various location based applications which use positioning technologies have been developed. Location-based approaches to computing device applications are becoming increasingly popular, especially on mobile client terminals.

In location-based applications, momentary location data is collected by a positioning module, such as a GPS receiver, serving as an input device. The data received from a space-based satellite navigation system is correlated with static outlines of street arrangements as depicted in street maps, to provide navigation instructions or location related data to a user of the mobile electronic device in real time.

US Patent Pub. No. US 2009/143080 teaches a method for providing mobile communication terminal location data. In the method, radio signal is received from a beacon in a wireless local area network. Next, beacon identification data that identifies the beacon is derived, based on the received radio signal. The identification data is transmitted to a server. Beacon location data is then provided by and received from the server. Mobile communication terminal location data, particularly presence data that indicates that the mobile communication terminal is in the vicinity of the beacon, is derived from the beacon location data. Upon such detected presence, an additional application process is advantageously executed. The method is executed by a processing device in a subscriber identity module that is included in the mobile communication terminal, thus achieving hidden operation and portability. The invention also relates to a subscriber identity module and a system operating in accordance with the method.

US Patent Pub. No. US 2005/221841 teaches a mobile personal communication device, such as a mobile telephone (cellular, satellite, or the like), that is capable of determining its geographic location, through an on-board GPS unit or other geographic locating mechanism, has a function that is disabled, enabled, modified or otherwise controlled when the personal communication device is determined to be within a defined area. The function controlled based on geographic region may include: the transmission of a data stream, such as a video or audio data stream, from or to the personal communication device; the disamblement or modification of ringers or other mechanism for audible notification of an event, for example, an incoming call or message from an external caller; the disablement or modification of an on-board camera or other on-board recording mechanism; and/or the disablement or modification of screen savers, disabling or modification of display lighting or backlighting or other functions of the personal communication device.

US Patent Pub. No. US 2009/322890 teaches methods and devices for implementing subsystem or functional aspect restrictions on a wireless handheld communication device. Data defining geographical boundaries of a restricted operating area is stored on the device. The present position of the device is ascertained and a determination is made whether the device is located within the restricted operating area. A restriction on the subsystem or functional aspect is imposed when it is determined the device is within the restricted operating area. The subsystem or functional aspect restriction can be communicated to the device via a wireless communication network. Additionally, the restrictions and boundaries can be communicated to the device as part of an IT security policy.

### SUMMARY OF THE INVENTION

The present invention provides computerized methods of identifying a location of mobile client terminals, and respective mobile client terminals, as defined in the claims. Unless otherwise defined, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

Implementation of the method and/or system of embodiments of the invention can involve performing or completing selected tasks manually, automatically, or a combination thereof. Moreover, according to actual instrumentation and equipment of embodiments of the method and/or system of the invention, several selected tasks could be implemented by hardware, by software or by firmware or by a combination thereof using an operating system.

For example, hardware for performing selected tasks according to embodiments of the invention could be implemented as a chip or a circuit. As software, selected tasks according to embodiments of the invention could be implemented as a plurality of software instructions being executed by a computer using any suitable operating system. In an exemplary embodiment of the invention, one or more tasks according to exemplary embodiments of method and/or system as described herein are performed by a data processor, such as a computing platform for executing a plurality of instructions. Optionally, the data processor includes a volatile memory for storing instructions and/or data and/or a non-volatile storage, for example, a magnetic hard-disk and/or removable media, for storing instructions and/or data. Optionally, a network connection is provided as well. A display and/or a user input device such as a keyboard or mouse are optionally provided as well.

### BRIEF DESCRIPTION OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:
FIG. 1 is a flowchart of a computerized method for positioning a mobile client terminal, according to some embodiments of the present invention;
FIG. 2A is a flowchart of a computerized method for modifying input device operation on mobile client terminals, according to some embodiments of the present invention;
FIG. 2B is a schematic illustration of a system for enforcing an input components operation policy on a plurality of mobile devices, according to some embodiments of the present invention;
FIG. 3A is a relational view of software and hardware components of a system for location-based modification of mobile computing device applications, according to some embodiments of the present invention;
FIG. 3B is a schematic illustration of an exemplary arrangement of components of a beacon device that is used to transmit a beacon signal, according to some embodiments of the present invention;
FIG. 3C is a schematic illustration if an electric circuit combining between a compact fluorescent lamp (CFL) and the arrangement of components depicted in FIG. 3B, according to some embodiments of the present invention;
FIG. 4 is a flowchart of a computerized method of providing a platform for tracking mobile client terminals' locations, according to some embodiments of the present invention;
FIG. 5 is a schematic representation of relations between software and hardware modules of a mobile client terminal and a platform for tracking mobile client terminals' locations, according to some embodiments of the present invention;
FIG. 6 is a schematic representation of a challenge-response protocol implementation for inquiring and setting a location based context for input devices of a mobile client terminal, according to some embodiments of the present invention; and
FIG. 7 is a representation of a broadcast protocol implementation for setting a location based context for input devices of a mobile client terminal, according to some embodiments of the present invention.

### DESCRIPTION OF EMBODIMENTS OF THE INVENTION

The present invention, in some embodiments thereof, relates to mobile computing device applications and, more particularly, but not exclusively, to positioning system and methods and to runtime location-based functionality modification of computing device applications on mobile client terminals.

Some embodiments of the present invention provide methods and systems of identifying locations of mobile client terminals, optionally within boundaries of confined spaces using a plurality of independent beacon devices which are dispersed in a target service area. Embodiments of the present invention further provide methods and systems of updating operation of input modules and/or units, such as a camera, a microphone, and/or a positioning module, for example a global positioning system (GPS) module, installed on or operated by mobile client terminals, according to the location of the mobile client terminals. Embodiments of the present invention further provide methods and systems of controlling operation of applications executed on mobile client terminals according to location data.

Determining the location of the mobile client terminal involves acquiring relatively small amounts of data from signals transmitted by independent beacon devices, also referred to herein as beacons. As used herein, a beacon may be any element which transmits a unique identifier, either sequentially, continuously, randomly and/or in response to an inquiry. Optionally, the mobile client terminal extracts an identifier from a beacon signal and determines a location based on a match between the identifier and a dataset mapping the locations of various beacons. The dataset maps between distinct beacon signals and locations of the beacons which omit the signals. In some embodiments signal strengths are measured, and the dataset is used to calculate distances between the mobile client terminal and one or more beacons according to measured signal strengths. This matching between the beacon signal strength and the dataset may improve the positioning accuracy. The dataset with the beacon positioning data may be provided from a central unit, such as a server. The beacons may be electric elements which transmits, for example broadcast, a beacon data over a signal encoded according to known protocols, such as Bluetooth™ ZigBee™, Wi-FI™, cellular, and Near Field Communication (NFC).

Embodiments of the systems and methods may be used, for example and without limitation, to centralize control of security settings in confined spaces. An input device usage policy may be used to dictate operation modes for input devices of visiting mobile client terminals. Such a usage policy may dictate, for example, blocking operation of input devices such as microphones and cameras in high-security areas.

Before explaining at least one embodiment of the invention in detail, it is to be understood that the invention is not necessarily limited in its application to the details of construction and the arrangement of the components and/or methods set forth in the following description and/or illustrated in the drawings and/or the Examples. The invention is capable of other embodiments or of being practiced or carried out in various ways.

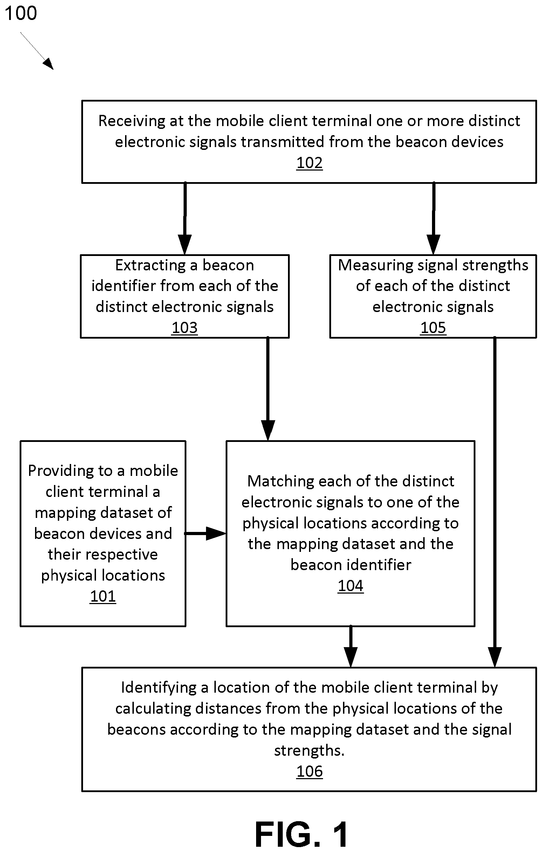

Reference is now made to FIG. 1, which is a flowchart of a computerized method for locating a mobile client terminal 100, according to some embodiments of the present invention.

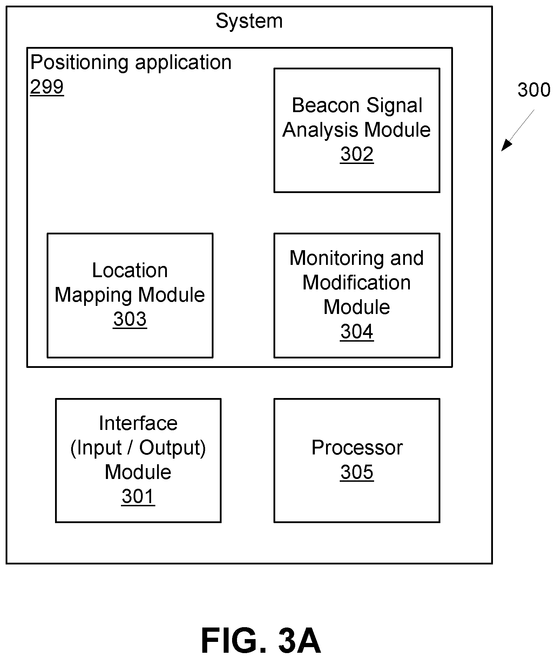

Reference is also made to FIG. 3A, which is a relational view of software and hardware components of a mobile device 300 hosting a positioning application, according to some embodiments of the present invention. The mobile device 300 includes an interface serving as an interface (input and/or output) module 301, for example an integrated Wi-Fi™ and/or Bluetooth™ module and a positioning application 299 having a beacon signal analysis module 302, a location mapping module 303, a monitoring and modification module 304, and a processor 305. For brevity, it should be noted that computing functions described herein may be performed using the processor 305. The positioning application 299 may be an app selected and installed via an app store or application market, a module provided with the mobile device 300, a part of an operating system, and/or an application that is remotely installed in the mobile device 300. The positioning application 299 may function in auto-run mode without any user intervention.

The system 300 may be implemented using software and/or hardware components.

As shown at numeral 101 of FIG. 1, the interface module 301 acquires, for example receives or accesses, a mapping dataset of beacons and their respective physical locations.

The beacons are electronic beacon devices capable of transmitting devices signals encoded according to a known protocol, such as Bluetooth™, ZigBee™, NFC and Wi-FI™ and/or according to a designated protocol. The transmission may be continuous, periodic, and/or upon demand, for example in response to an inquiry from a mobile device.

For example, and without limitation, the electronic beacon devices may be radio frequency (RF) beacons, microwave beacons, infrared beacons, and/or sonar beacons. The beacons may transmit data in various forms such as but not limited to light, sound or combinations thereof, typically unnoticeable by human vision or hearing capabilities.

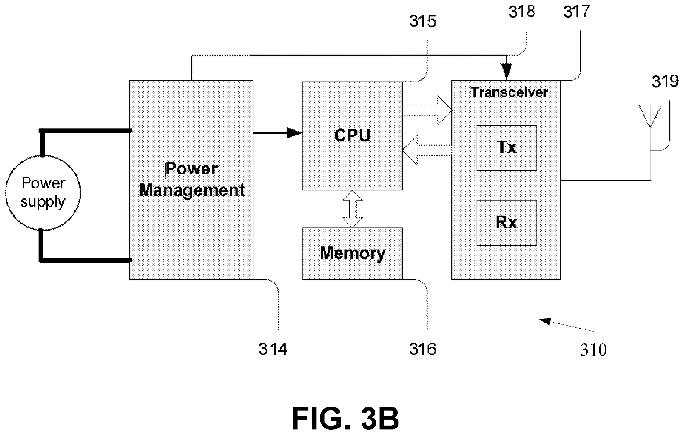

For example, reference is now made to FIG. 3B, which is a schematic illustration of an exemplary arrangement of components of a beacon device 310 which is used to transmit a beacon signal, according to some embodiments of the present invention. The exemplary beacon device includes a power management unit 314 which supplies energy for beacon components. For example, a power supply line 318 is connected to a transceiver 317 and allows the power management unit 314 to adjust power output of the transceiver 317. Central processing unit (CPU) 315, which may be implemented using a microprocessor, sends beacon data, for example a beacon identifier (ID), one more security setup(s), a protocol implementation and/or the like, from a memory 316. The CPU 315 may receive data via the transceiver, for example firmware update(s), reset command, new beacon ID and configuration parameters. The transceiver 317 is connected to an antenna 319. The transmission may be according to various protocols, for example Wi-Fi™, Bluetooth™, WiMAX™, ZigBee™, NFC, Cellular and/or the like.

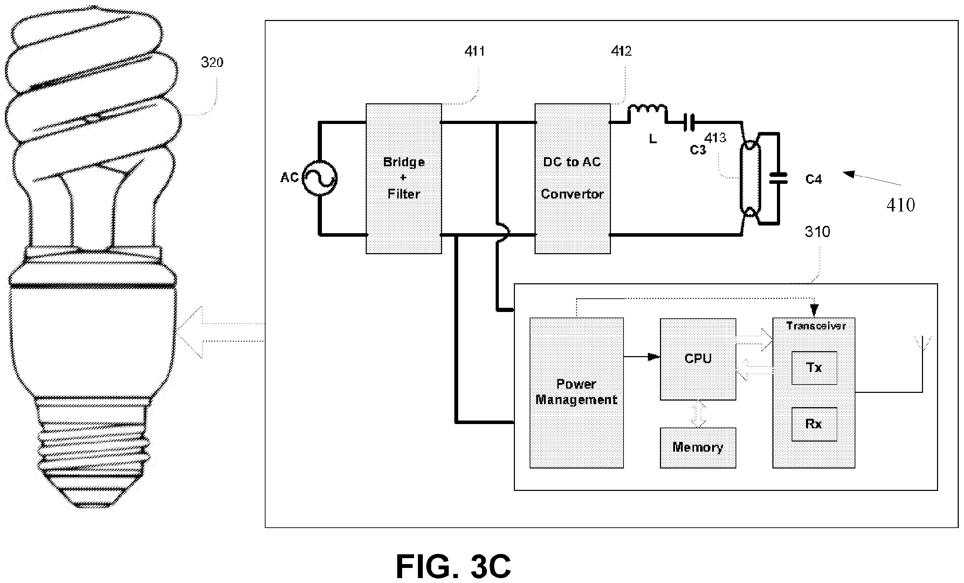

As described above, the beacon device may be an independent device that is set to be inexpensive and simple for installation. According to some embodiments of the present invention, the beacon device is integrated within a lamp that fits into a light bulb socket, for example into a compact fluorescent lamp (CFL). For example, reference is also made to FIG. 3C, which is a schematic illustration if an electric circuit combining between the CFL 320 and the arrangement of components 310, according to some embodiments of the present invention. The CFL 320 includes an electronic ballast unit with a bridge and filter unit 411, direct current (DC) to alternating current (AC) converter 412 and lamp 413. The beacon is connected to bridge and filter unit 411 as it power supply. Optionally, the beacon and the electronic ballast for CFL are integrated together at the CFL's case.

According to some embodiments of the present invention, the beacon device includes a solar panel or any other renewable energy generator for powering a battery. In such embodiments, the beacon device includes a renewable energy generator (i.e. linear or curved solar photovoltaic (PV) panel, a miniature wind turbine system) a charge controller and battery. Such beacon device may transmits a beacon signal without the having a fixed power source.

According to some embodiments of the present invention, the beacon device includes an inductive charger for powering a battery. In such embodiments, the beacon device may be charged when in proximity to an induction source. Such beacon device may transmit a beacon signal when being powered.

The physical locations of the beacons in each dataset entry may be defined and provided according to a virtual grid of coordinates, optionally mapping one or more confined spaces, namely indoor, roofed, and/or covered surroundings, such as halls, rooms, warehouses, containers portions and/or the like. The beacons may be used for indicating room segments, for example aisles in a store (i.e. supermarkets aisles), a room area, a proximity to a certain shelf or object, and/or the like.

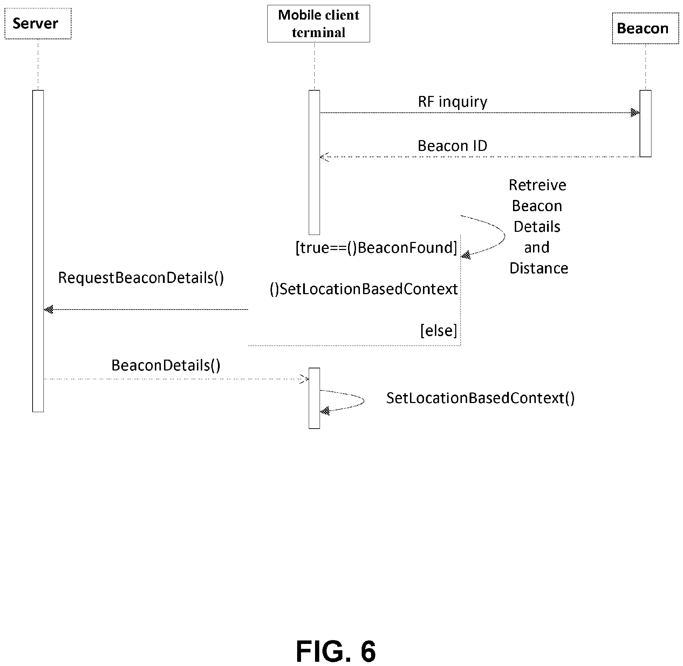

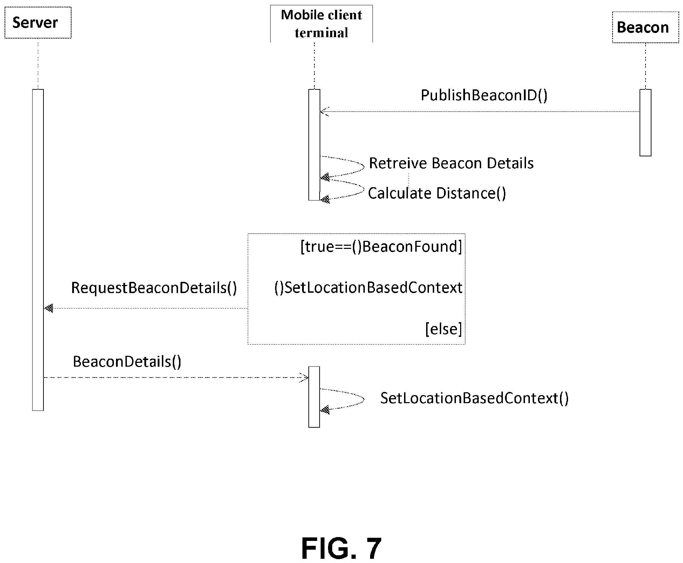

As shown at numeral 102 of FIG. 1, the interface module 301 further acquires one or more distinct signals transmitted from one or more of the beacons either in a push or a pull scheme for example as depicted in FIGs. 6 and 7. In some embodiments, the distinct signals are electronic signals of various forms broadcasted from the beacons and received by the interface module 301 continuously or periodically. In other embodiments, the interface transmits a periodic challenge message and receives one or more responses in the form of electronic signals from one or more beacons.

Each of the received electronic signals is distinct, corresponding with an identifier indicative of a unique beacon device. As shown at numeral 103 of FIG. 1, the beacon signal analysis module 302 extracts a unique beacon identifier from each of the distinct signals associating each distinct signal with a respective beacon device. Then, as shown at numeral 104 of FIG. 1, each of the distinct signals is matched with one of the physical locations of the beacons according to the mapping dataset and the unique beacon identifier, such that each distinct signal is associated with a specific location according to the signal's source beacon.

As shown at numeral 105 of FIG. 1, the beacon signal analysis module 302 may further measure signal strengths of each distinct signal. Finally, as shown at numeral 106 of FIG. 1, the location mapping module 303 uses the identified physical locations of the beacons associated with each of the received distinct signals and the optional signal strengths of each of the received distinct signals to identify a momentary location of the mobile client terminal. For example, each record in the mapping database includes a positioning data, a unique beacon identifier, and a signal strength threshold. Optionally, only when the measured signal strength is above the signal strength threshold, the positioning data is used for calculating the current location of the mobile device.

Location identification may be set according calculations of the momentary distance between the mobile client terminal and each of the locations of the beacon devices from which signals were received. The measured signal strengths may be used to achieve better accuracy of distance calculations. Geometric calculation techniques such as but not limited to triangulation may be used to calculate distances and identify the position of the mobile client terminal respective to the predefined reference points.

It should be noted that as the locational data is deduced from a beacon signal, the accuracy of the locational data may be with a resolution of less than 3 meters, for example less than 1 meter. Moreover, as the locational data is deduced from a beacon signal there is no need in a cellular and/or GPS connections and/or a SIM card installation.

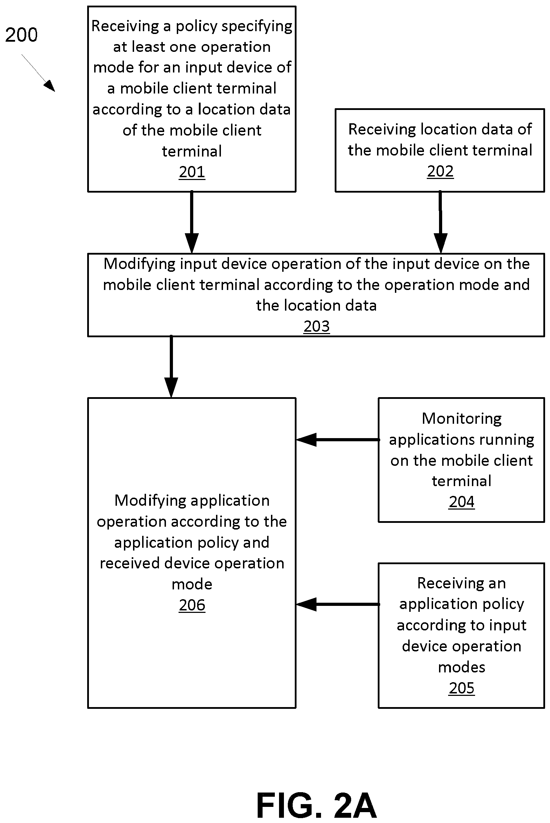

Reference is now made to FIG. 2A, which is a flowchart of a computerized method for modifying input component operation on mobile client terminals 200 according to their location, optionally based on a selected policy, according to some embodiments of the present invention.

Input components on a mobile client terminal may be integrated into the terminal, or alternatively auxiliary devices momentarily connected to the mobile client terminal via a standard or a dedicated port. Input components may be used to acquire visual, audible, positional, tactile and mechanical input related to the mobile client terminal. Exemplary input components may include devices such as but not limited to cameras, microphones, positioning units, touch sensors and movement sensors.

First, as shown at numeral 201 of FIG. 2A, the interface module 301 acquires, for example receives or accesses, a policy specifying at least one operation mode for an input component of a mobile client terminal according to a location data of the mobile client terminal.

Exemplary operation modes for input components may include:
- Turning a specific input component and/on or off altogether, for example turning off a camera integrated into or connected to a mobile client terminal upon entering a high security zone in a factory.
- Enabling and/or disabling certain features of a specific input component, for example enabling microphone operation and sound recordings upon exiting classified meeting rooms.
- Applying a filter which processes recording of input components, for example processes video and/or audio recordings. In such an embodiment, filters may be used for scrambling recorded data. The scrambled recordings may be later decoded, for example by an external decoding module. In such a manner, the recorded data may be retrieved only a system operator.
- Turning on and off groups of input components according to categories, for example disabling all visual and audio input components on a mobile client terminal located within a confined space for a pre-defined period.
- Disabling or operating groups of applications according to categories, for example disabling all applications classified as restricted applications within a confined space for a pre-defined period.

Also, as shown at numeral 202 of FIG. 2A, the interface module 301 further acquires a location data of the mobile client terminal, optionally as identified by the location mapping module 303 and described above.

Then, as shown at numeral 203 of FIG. 2A, the monitoring and modification module 304 modifies the operation of input component(s) on the mobile client terminal according to the received operation mode and the location data.

In some embodiments, the monitoring and modification module 304 may further monitor applications running on the mobile client terminal which use data acquired by the input components, as shown at numeral 204 of FIG. 2A. The interface module 301 may acquire an application policy for the monitored applications, as shown at numeral 205 of FIG. 2A.

An application policy may dictate an operation mode for any application, for example mail application, communication application, a game application and/or an application which uses data acquired from one or more input components. Application mode options may be demonstrated herein using an exemplary face and/or voice recognition application which uses facial images and sounds acquired from cameras and microphones to identify the identity of a participant in a meeting.
- The application may be turned on or off altogether, for example turned off in a highly classified zone of a nuclear power plant.
- The application may be updated to include new modules and/or participant data upon entering a press meeting zone of a governmental office.
- Certain features of the application may be enabled or disabled according to input component categories, for example enabling voice recognition and disabling facial recognition.
- Location based application triggering and prioritizing - the usage of one or more specific mobile applications at an area of interest such as an organization, a public event and/or the like may be prioritized according to the location of the mobile device.
- Access to corporate and network service, private networks and/or privileged resources may be determined according to the location of the mobile device.

Selecting one or more secure policies according to an area of interest. The monitoring and modification module 304 may then modify the operation mode of one or more applications running on the mobile client terminal which use data acquired by the input components, as shown at numeral 206 of FIG. 2A.

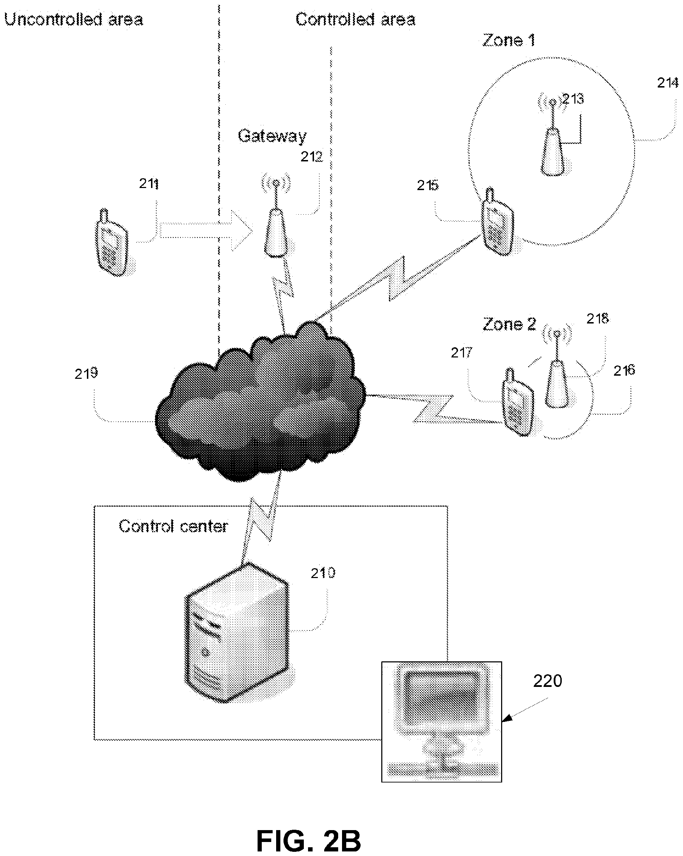

For example, reference is now made to FIG. 2B, which is a schematic illustration of a system for enforcing an input components operation policy on a plurality of mobile devices, according to some embodiments of the present invention. In FIG. 2B mobile device 211, which is located in an uncontrolled area is free of any device control. If monitoring and modification module 304 is installed in the mobile device 211 then the application is in a standby mode. When the mobile device 211 passes through a gateway base station 212 it is intercepted by the gateway and the details of mobile device 211 is passed via a network 219 to main server 210. Base station may refer to a cellular base station, Wi-Max™ station and/or the like. Optionally, the main server 210 sends a default policy to be enforced at the entrance of the controlled area and messages such as welcome and/or warning message to mobile device 211. Optionally, the main server 220 is connected to a user interface (UI) 220 that allows an operator to set policies and to receive information pertaining to connected client terminals.

In use, a mobile device 215 may report to a main server 210 details of identified beacons, such as 213 at transmitting area 214. The main server 210 may now update a control policy and/or services at the mobile device 215 according to the beacon identifier, for example indicative of a classified room at the size of 3mx3mx2.5m. The policy may also be extracted from a policy dataset correlated with a mapping dataset which maps the location of beacon and documents which policy should be acted in proximity to which beacons. Different areas may be associated with different policies. For example, input components of mobile device 217 which identifies its location according to a beacon signal from beacon 218 in transmitting area 216 may be operated according to a different policy than mobile device 215 which identifies its location according to a beacon signal from beacon 213.

Optionally, any attempt to uninstall the positioning application 299 is reported to the main server 210. Optionally, a protection mechanism is installed for preventing uninstalling the positioning application 299.

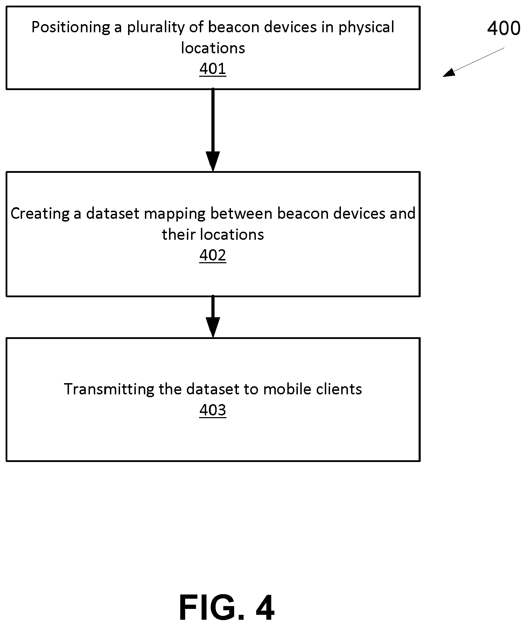

Reference is made to FIG. 4, which is a flowchart of a computerized method of providing a platform for tracking mobile client terminals' locations, according to some embodiments of the present invention. As shown at numeral 401 of FIG. 4, the method comprises positioning a plurality of beacons in a plurality of physical locations, optionally within a confined space. Placement of the beacons may be documented in a dataset reflecting locations in a virtual grid mapping a space.

Then, as shown at numerals 402 and 403 of FIG. 4, a dataset mapping between beacon devices and their physical locations is created and transmitted to mobile client terminals. Transmission to mobile client terminals may take place, for example and without limitation, by broadcasting the dataset mapping to mobile client terminals which enter a confined space.

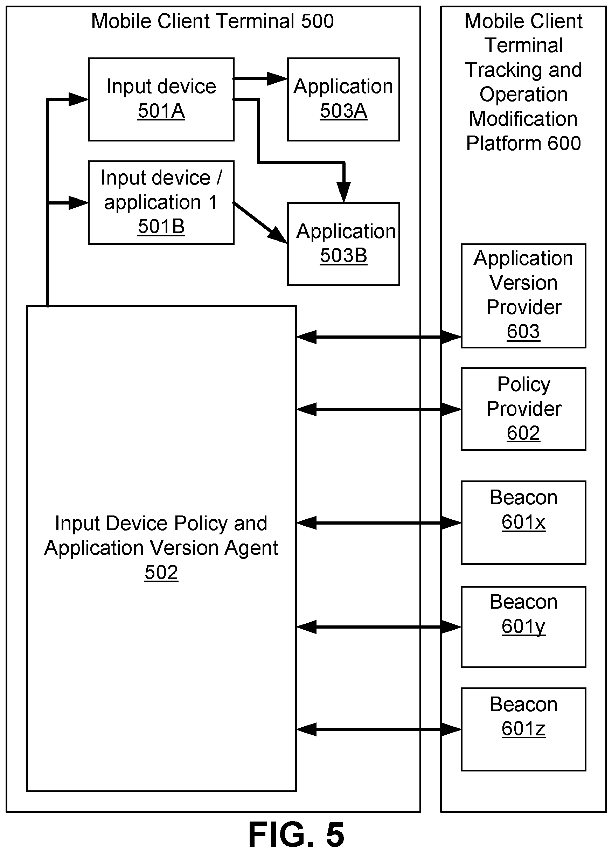

Reference is made to FIG. 5, which is a schematic representation of relations between software and hardware modules of a generalized embodiment of a mobile client terminal 500 and an exemplary generalized platform 600 for mobile client terminals' location tracking and application modification, according to some embodiments of the present invention.

Mobile client terminal 500 comprises two input components 501A and 501B, a policy and application version agent 502 for modification of applications and input components, and two applications 503A and 503B. Application 503A uses input data received from input component 501A, and application 503B uses input data received from input components 501A and 501B.

Generalized platform 600 comprises three beacon devices 601x, 601y and 601z which located within a confined space, a policy provider 602 dictating device operation policies for input components of mobile client terminals within the confined space, and an application version provider 603 for updating applications running on mobile client terminals according to their location information.

Policy and application version agent 502 serves as the interaction unit between the mobile client terminal and the platform. It interacts with beacon devices 601x, 601y and 601z to receive location data of the client terminal, queries and receives device operation policies from the policy provider 602 dictating operation policies for each of input components 501A and 501B, and updates applications versions for applications 503A and 503B according to its interaction with application version provider 603.

Reference is made to FIG. 6 is a schematic representations of a challenge-response protocol implementation for inquiring and setting a location based context for input components of a mobile client terminal, according to some embodiments of the present invention. It should be noted that the communication between the beacon and the mobile device is held without pairing. In such a manner, less energy and bandwidth is required. Reference is also made to FIG. 7, which is a representation of a broadcast protocol implementation for setting a location based context for input components of a mobile client terminal, according to some embodiments of the present invention.

The challenge response and/or broadcast protocols illustrated in FIG. 6 and FIG.7 respectively may be used for communication with beacon devices, input component policy providers and application version providers, as demonstrated above.

It is expected that during the life of a patent maturing from this application many relevant mobile client terminals and input components will be developed and the scope of the term mobile client terminal and/or input component is intended to include all such new technologies a priori.

As used herein the term "about" refers to ± 10 %.

The terms "comprises", "comprising", "includes", "including", "having" and their conjugates mean "including but not limited to". This term encompasses the terms "consisting of" and "consisting essentially of".

The phrase "consisting essentially of" means that the composition or method may include additional ingredients and/or steps, but only if the additional ingredients and/or steps do not materially alter the basic and novel characteristics of the claimed composition or method.

As used herein, the singular form "a", "an" and "the" include plural references unless the context clearly dictates otherwise. For example, the term "a compound" or "at least one compound" may include a plurality of compounds, including mixtures thereof.

The word "exemplary" is used herein to mean "serving as an example, instance or illustration". Any embodiment described as "exemplary" is not necessarily to be construed as preferred or advantageous over other embodiments and/or to exclude the incorporation of features from other embodiments.

The word "optionally" is used herein to mean "is provided in some embodiments and not provided in other embodiments". Any particular embodiment of the invention may include a plurality of "optional" features unless such features conflict.

Throughout this application, various embodiments of this invention may be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination or as suitable in any other described embodiment of the invention. Certain features described in the context of various embodiments are not to be considered essential features of those embodiments, unless the embodiment is inoperative without those elements.

## Claims

1. A computerized method of identifying a location of mobile client terminals, comprising:
monitoring (204) a plurality of applications executed on a mobile client terminal, said plurality of applications using data acquired from at least one input component of said mobile client terminal;
providing (205) a plurality of application policies, each said application policy specifying a plurality of operation modes for said plurality of applications;
providing (101) to a mobile client terminal a mapping dataset which defines a plurality of physical locations of a plurality of beacon devices, wherein each said operation mode is associated with at least one of said plurality of physical locations;
receiving (102) at said mobile client terminal at least one distinct signal transmitted from at least one of said plurality of beacon devices;
extracting (103) from each of said at least one distinct signal an identifier of a beacon device of said plurality of beacon devices;
matching (104), by said mobile client terminal, between said identifier and one of said plurality of physical locations using said mapping dataset;
acquiring (105) location data of said mobile client according to said matching;
reporting to a server, at least one identified beacon, based on said extracting;
updating, at said mobile client terminal, said plurality of application policies, according to a plurality of updated application policies received from said server in response to said reporting; and
selecting, for each of said plurality of applications, one of said plurality of operation modes according said current location data.

2. The computerized method of any one of the preceding claims, further comprising measuring signal strength of each said at least one distinct signal, and wherein identifying a location of said mobile client further comprises calculating a physical distance from each of said plurality of physical locations according to said signal strength.

3. The computerized method of any one of the preceding claims, wherein said physical distance is less than 1 meter.

4. The method of any one of the preceding claims, wherein said plurality of physical locations are within the boundaries of a confined space of a building; wherein said mapping dataset is defined according to a grid of coordinates within said confined space and wherein said physical locations are provided according to said grid of coordinates.

5. The computerized method of any one of the preceding claims, wherein said plurality of operation modes comprises a member of a group consisting of: filtering an output of said at least one input component, deactivating said at least one input component, encrypting an output of said at least one input component, rerouting said output of said at least one input component.

6. The computerized method of any one of the preceding claims, wherein said at least one input component comprises at least one of a camera and a microphone.

7. The computerized method of any one of the preceding claims, wherein said at least one input component is an auxiliary device connected to said mobile client terminal via a port located on said mobile client terminal.

8. The computerized method of any one of the preceding claims, wherein said at least one input component comprises a positioning unit.

9. The computerized method of any one of the preceding claims, further comprising:
monitoring at least one application executed on said mobile client terminal according to input data received from said at least one input component;
operating said at least one application according to said current location data.

10. The computerized method of any one of the preceding claims, wherein said location data refers to an area within boundaries of a confined space, and wherein said policy is restricted to said boundaries.

11. A mobile client terminal, comprising:
a processor (305);
a repository which stores a mapping dataset defining a plurality of physical locations of a plurality of beacon device identifiers;
a beacon signal analysis module (302) which extracts a first of said plurality of beacon device identifiers from at least one beacon signal transmitted by a beacon device;
a location mapping module (303) which uses said processor to calculate a location of said mobile client terminal from one of said plurality of physical locations according to a match between said first beacon identifier and said mapping dataset; and
an application management module (502) which reports to a server (210), at least one identified beacon, based on said extracting, updates a plurality of application policies, according to a plurality of updated application policies received from said server in response to said reporting; and automatically dictates an operation mode, specified by said plurality of updated application policies, for each one of a plurality of applications according to said selected physical location, said plurality of applications are using at least one input component of said mobile client terminal and are hosted by said mobile client terminal.

12. The mobile client terminal of claim 11, wherein said application management module prioritizes said at least one application according to said selected physical location.

13. The mobile client terminal of any one of claims 11-12, wherein said application management module activates said at least one application according to said selected physical location.

14. The mobile client terminal of any one of claims 11-13, wherein said application management module facilitates said at least one application to access storage according to said selected physical location.

15. The mobile client terminal of any one of claims 11-14, wherein each one of said plurality of beacon device identifiers is a unique identifier.

## Patentansprüche

1. Rechnergestütztes Verfahren zum Identifizieren eines Standorts mobiler Client-Endgeräte, umfassend:
die Überwachung (204) einer Vielzahl von Anwendungen, ausgeführt auf einem mobilen Client-Endgerät, welche Vielzahl von Anwendungen Daten verwendet, die von mindestens einer Eingangskomponente des mobilen Client-Endgeräts erfasst werden;
die Bereitstellung (205) einer Vielzahl von Anwendungspolicies, wobei jede Anwendungspolicy eine Vielzahl von Betriebsmodi für die Vielzahl von Anwendungen festlegt;
die Bereitstellung (101) eines Mapping-Datensatzes, der eine Vielzahl physischer Standorte einer Vielzahl von Bakenvorrichtungen definiert, an ein mobiles Client-Endgerät, wobei jeder der Betriebsmodi mindestens einem der Vielzahl physischer Standorte zugeordnet ist;
das Empfangen (102), an dem mobilen Client-Endgerät, von mindestens einem eindeutigen Signal, übertragen von mindestens einer der Vielzahl von Bakenvorrichtungen;
die Extraktion (103) von jedem der mindestens einen eindeutigen Signale eines Identifikators einer Bakenvorrichtung der Vielzahl von Bakenvorrichtungen;
das Abgleichen (104) durch das mobile Client-Endgerät zwischen dem Identifikator und einem der Vielzahl physischer Standorte unter Verwendung des Mapping-Datensatzes;
das Erfassen (105) von Standortdaten des mobilen Clients entsprechend dem Abgleich;
die Meldung an einen Server von mindestens einer identifizierten Bake auf der Basis der Extraktion;
die Aktualisierung an dem mobilen Client-Endgerät der Vielzahl von Anwendungspolicies entsprechend einer Vielzahl aktualisierter Anwendungspolicies, empfangen von dem Server als Antwort auf die Meldung; und
die Auswahl für jede der Vielzahl von Anwendungen von einem der Vielzahl von Betriebsmodi entsprechend den aktuellen Standortdaten.

2. Computergestütztes Verfahren nach einem der vorhergehenden Ansprüche, ferner umfassend das Messen der Signalstärke von jedem des mindestens einen eindeutigen Signals, und wobei die Identifikation eines Standorts des mobilen Clients ferner die Berechnung einer physischen Entfernung von jedem der Vielzahl von physischen Standorten entsprechend der Signalstärke umfasst.

3. Computergestütztes Verfahren nach einem der vorhergehenden Ansprüche, wobei die physische Entfernung weniger als 1 Meter ist.

4. Verfahren nach einem der vorhergehenden Ansprüche, wobei die Vielzahl physischer Standorte innerhalb der Grenzen eines eingeschlossenen Raumes eines Gebäudes ist; wobei der Mapping-Datensatz entsprechend einem Koordinatengitter innerhalb des eingeschlossenen Raumes definiert ist und wobei die physischen Standorte entsprechend dem Koordinatengitter bereitgestellt sind.

5. Computergestütztes Verfahren nach einem der vorhergehenden Ansprüche, wobei die Vielzahl von Betriebsmodi ein Mitglied einer Gruppe umfasst, bestehend aus: Filtern eines Ausgangs der mindestens einen Eingangskomponente, Deaktivieren der mindestens einen Eingangskomponente, Verschlüsseln eines Ausgangs der mindestens einen Eingangskomponente, Umleiten des Ausgangs der mindestens einen Eingangskomponente.

6. Computergestütztes Verfahren nach einem der vorhergehenden Ansprüche, wobei die mindestens eine Eingangskomponente mindestens eines von einer Kamera und einem Mikrofon umfasst.

7. Computergestütztes Verfahren nach einem der vorhergehenden Ansprüche, wobei die mindestens eine Eingangskomponente eine Hilfsvorrichtung ist, die über einen Anschluss, angeordnet auf dem mobilen Client-Endgerät, mit dem mobilen Client-Endgerät verbunden ist.

8. Computergestütztes Verfahren nach einem der vorhergehenden Ansprüche, wobei die mindestens eine Eingangskomponente eine Positionierungseinheit umfasst.

9. Computergestütztes Verfahren nach einem der vorhergehenden Ansprüche, ferner umfassend:
die Überwachung von mindestens einer Anwendung, ausgeführt auf dem mobilen Client-Endgerät entsprechend Eingangsdaten, empfangen von der mindestens einen Eingangskomponente;
das Betreiben der mindestens einen Anwendung entsprechend den aktuellen Standortdaten.

10. Computergestütztes Verfahren nach einem der vorhergehenden Ansprüche, wobei die Standortdaten auf einen Bereich innerhalb der Grenzen eines eingeschlossenen Raumes verweisen und wobei die Policy auf die Grenzen beschränkt ist.

11. Mobiles Client-Endgerät, umfassend:
einen Prozessor (305);
einen Speicher, der einen Mapping-Datensatz speichert, der eine Vielzahl physischer Standorte einer Vielzahl von Bakenvorrichtungsidentifikatoren definiert;
ein Bakensignalanalysemodul (302), das einen ersten der Vielzahl von Bakenvorrichtungsidentifikatoren von mindestens einem Bakensignal, übertragen von einer Bakenvorrichtung, extrahiert;
ein Standort-Mappingmodul (303), das den Prozessor verwendet, um einen Standort des mobilen Client-Endgeräts von einem der Vielzahl physischer Standorte entsprechend eines Abgleichs zwischen dem ersten Bakenidentifikator und dem Mapping-Datensatz;
und
ein Anwendungsmanagementmodul (502), das einem Server (210) mindestens eine identifizierte Bake basierend auf der Extraktion meldet, eine Vielzahl von Anwendungspolicies entsprechend einer Vielzahl aktualisierter Anwendungspolicies, empfangen von dem Server in Antwort auf die Meldung, aktualisiert; und automatisch für jede einer Vielzahl von Anwendungen entsprechend dem gewählten physischen Standort einen Betriebsmodus vorschreibt, angegeben von der Vielzahl aktualisierter Anwendungspolicies, welche Vielzahl von Anwendungen mindestens eine Eingangskomponente des mobilen Client-Endgeräts verwendet und von dem mobilen Client-Endgerät gehostet wird.

12. Mobiles Client-Endgerät nach Anspruch 11, wobei das Anwendungsmanagementmodul die mindestens eine Anwendung entsprechend dem gewählten physischen Standort priorisiert.

13. Mobiles Client-Endgerät nach einem der Ansprüche 11-12, wobei das Anwendungsmanagementmodul die mindestens eine Anwendung entsprechend dem gewählten physischen Standort aktiviert.

14. Mobiles Client-Endgerät nach einem der Ansprüche 11-13, wobei das Anwendungsmanagementmodul es der mindestens einen Anwendung erleichtert, auf Speicherung entsprechend dem gewählten physischen Standort zuzugreifen.

15. Mobiles Client-Endgerät nach einem der Ansprüche 11-14, wobei jeder der Vielzahl von Bakenvorrichtungsidentifikatoren ein eindeutiger Identifikator ist.

## Revendications

1. Procédé informatisé d'identification d'un emplacement de terminaux clients mobiles, comprenant les étapes ci-dessous consistant à :
surveiller (204) une pluralité d'applications exécutées sur un terminal client mobile, ladite pluralité d'applications utilisant des données acquises auprès d'au moins un composant d'entrée dudit terminal client mobile ;
fournir (205) une pluralité de politiques d'applications, chaque dite politique d'applications spécifiant une pluralité de modes de fonctionnement pour ladite pluralité d'applications ;
fournir (101), à un terminal client mobile, un ensemble de données de mise en correspondance qui définit une pluralité d'emplacements physiques d'une pluralité de dispositifs de balise, dans lequel chaque dit mode de fonctionnement est associé à au moins un emplacement de ladite pluralité d'emplacements physiques ;
recevoir (102), au niveau dudit terminal client mobile, au moins un signal distinct transmis à partir d'au moins un dispositif de ladite pluralité de dispositifs de balise ;
extraire (103), de chacun dudit au moins un signal distinct, un identifiant d'un dispositif de balise de ladite pluralité de dispositifs de balise ;
mettre en correspondance (104), par ledit terminal client mobile, ledit identifiant et un emplacement de ladite pluralité d'emplacements physiques, en utilisant ledit ensemble de données de mise en correspondance ;
acquérir (105) des données de localisation dudit terminal client mobile selon ladite mise en correspondance ;
signaler, à un serveur, au moins une balise identifiée, sur la base de ladite étape d'extraction ;
mettre à jour, au niveau dudit terminal client mobile, ladite pluralité de politiques d'applications, selon une pluralité de politiques d'applications mises à jour reçue en provenance dudit serveur en réponse à ladite étape de signalement ; et
sélectionner, pour chaque application de ladite pluralité d'applications, un mode de ladite pluralité de modes de fonctionnement selon lesdites données de localisation en cours.

2. Procédé informatisé selon l'une quelconque des revendications précédentes, comprenant en outre l'étape consistant à mesurer l'intensité de signal de chacun dudit au moins un signal distinct, et dans lequel l'étape d'identification d'un emplacement dudit terminal client mobile comporte en outre l'étape consistant à calculer une distance physique depuis chaque emplacement de ladite pluralité d'emplacements physiques selon ladite intensité de signal.

3. Procédé informatisé selon l'une quelconque des revendications précédentes, dans lequel ladite distance physique est inférieure à 1 mètre.

4. Procédé selon l'une quelconque des revendications précédentes, dans lequel ladite pluralité d'emplacements physiques est située dans les limites d'un espace confiné d'un bâtiment ; dans lequel ledit ensemble de données de mise en correspondance est défini selon une grille de coordonnées au sein dudit espace confiné, et dans lequel lesdits emplacements physiques sont fournis selon ladite grille de coordonnées.

5. Procédé informatisé selon l'une quelconque des revendications précédentes, dans lequel ladite pluralité de modes de fonctionnement comporte un membre d'un groupe composé des modes suivants : le filtrage d'une sortie dudit au moins un composant d'entrée, la désactivation dudit au moins un composant d'entrée, le chiffrement d'une sortie dudit au moins un composant d'entrée, le réacheminement de ladite sortie dudit au moins un composant d'entrée.

6. Procédé informatisé selon l'une quelconque des revendications précédentes, dans lequel ledit au moins un composant d'entrée comporte au moins l'un(e) parmi une caméra et un microphone.

7. Procédé informatisé selon l'une quelconque des revendications précédentes, dans lequel ledit au moins un composant d'entrée est un dispositif auxiliaire connecté audit terminal client mobile par l'intermédiaire d'un port situé sur ledit terminal client mobile.

8. Procédé informatisé selon l'une quelconque des revendications précédentes, dans lequel ledit au moins un composant d'entrée comporte une unité de positionnement.

9. Procédé informatisé selon l'une quelconque des revendications précédentes, comprenant en outre les étapes ci-dessous consistant à :
surveiller au moins une application exécutée sur ledit terminal client mobile selon des données d'entrée reçues en provenance dudit au moins un composant d'entrée ;
exploiter ladite au moins une application selon lesdites données de localisation en cours.

10. Procédé informatisé selon l'une quelconque des revendications précédentes, dans lequel lesdites données de localisation font référence à une zone située dans les limites d'un espace confiné, et dans lequel ladite politique est limitée auxdites limites.

11. Terminal client mobile, comprenant :
un processeur (305) ;
un référentiel qui stocke un ensemble de données de mise en correspondance définissant une pluralité d'emplacements physiques d'une pluralité d'identifiants de dispositifs de balise ;
un module d'analyse de signal de balise (302) qui extrait un premier identifiant de ladite pluralité d'identifiants de dispositifs de balise d'au moins un signal de balise transmis par un dispositif de balise ;
un module de mise en correspondance d'emplacements (303) qui utilise ledit processeur en vue de calculer un emplacement dudit terminal client mobile à partir d'un emplacement de ladite pluralité d'emplacements physiques selon une correspondance entre ledit premier identifiant de balise et ledit ensemble de données de mise en correspondance ; et
un module de gestion d'applications (502) qui signale, à un serveur (210), au moins une balise identifiée, sur la base de ladite extraction, qui met à jour une pluralité de politiques d'applications, selon une pluralité de politiques d'applications mises à jour reçue en provenance dudit serveur en réponse audit signalement ; et qui dicte automatiquement un mode de fonctionnement, spécifié par ladite pluralité de politiques d'applications mises à jour, pour chacune d'une pluralité d'applications, selon ledit emplacement physique sélectionné, ladite pluralité d'applications utilisant au moins un composant d'entrée dudit terminal client mobile et étant hébergée par ledit terminal client mobile.

12. Terminal client mobile selon la revendication 11, dans lequel ledit module de gestion d'applications priorise ladite au moins une application selon ledit emplacement physique sélectionné.

13. Terminal client mobile selon l'une quelconque des revendications de 11 à 12, dans lequel ledit module de gestion d'applications active ladite au moins une application selon ledit emplacement physique sélectionné.

14. Terminal client mobile selon l'une quelconque des revendications de 11 à 13, dans lequel ledit module de gestion d'applications facilite l'accès de ladite au moins une application à un stockage selon ledit emplacement physique sélectionné.

15. Terminal client mobile selon l'une quelconque des revendications de 11 à 14, dans lequel chaque identifiant de ladite pluralité d'identifiants de dispositifs de balise est un identifiant unique.
